# EUROPÄISCHE PATENTANMELDUNG

(11) **EP 1 757 427 A2**
(43) Veröffentlichungstag der Anmeldung: **28.02.2007**
(21) Anmeldenummer: 06015315.2
(22) Anmeldetag: 24.07.2006
(51) Int. Cl.: B29C 45/56, B29C 45/00, F04D 29/02, F04D 29/32

(54) **Spritzpräge-Verfahren**

(30) Priorität: 27.08.2005 DE 102005040616
(71) Anmelder: Behr GmbH & Co. KG, 70469 Stuttgart (DE)
(72) Erfinder: Kämmler, Georg, 70439 Stuttgart (DE)
(74) Vertreter: Mantel, Berthold Friedrich

(57) **Zusammenfassung**

Die Erfindung betrifft ein Spritzpräge-Verfahren, insbesondere zur Herstellung von Lüfterrädem aus einem Thermoplast, wobei der Schließ- und Prägevorgang (ts) maximal so lange wie der Füllvorgang (tf) dauert. Eine weitere Erfindung betrifft ein Lüfterrad, das mit Hilfe eines Tauchkantenwerkzeugs (1) hergestellt ist.

## Beschreibung

Die Erfindung betrifft ein Spritzpräge-Verfahren, insbesondere für Thermoplaste, gemäß dem Oberbegriff des Anspruchs 1.

Das Spritzprägen ist eine Verfahrensvariante des Spritzgießens, das bisher im wesentlichen bei Bauteilen wie Linsen oder CDs Anwendung findet, bei denen es auf eine sehr homogene Füllung der Strukturen, geringe Verzüge, hohe Präzisionsgenauigkeit und geringe innere Spannungen ankommt. Dieses Verfahren verbindet die Vorteile des Spritzgießens mit denen des Heißprägens. Beim Spritzprägen wird auf einer konventionellen Spritzgießmaschine die Schmelze in ein teilgeöffnetes Werkzeug, welches als Tauchkanten-Werkzeug ausgebildet ist, eingespritzt. Die Kavität ist beim Füllen wesentlich größer, der Fülldruck und die Orientierung von Molekülen daher erheblich geringer. Die Ausformung der Bauteile geschieht durch Schließen des Werkzeugs, vergleichbar mit der Druckbeaufschlagung beim Heißprägen.

Es ist Aufgabe der Erfindung, ein verbessertes Spritzpräge-Vertahren zur Verfügung zu stellen.

Diese Aufgabe wird gelöst durch ein Spritzpräge-Verfahren mit den Merkmalen des Anspruchs 1. Vorteilhafte Ausgestaltungen sind Gegenstand der Unteransprüche.

Erfindungsgemäß wird ein Spritzpräge-Verfahren, insbesondere zur Herstellung von Lüfterrädern aus einem Thermoplast, vorgeschlagen, bei dem der Schließ- und Prägevorgang maximal so lange wie der Füllvorgang dauert. Der Schließvorgang kann unmittelbar nach Beendigung des Füllvorgangs oder aber bereits parallel zum Füllvorgang starten und ist deutlich schneller als bei bisherigen Verfahren. Kurze Fließwege vor dem Prägevorgang stellen sicher, dass ein scherungsarmes Einspritzen möglich ist. Durch das anschließende schnelle Zusammenfahren des Werkzeugs erfolgt eine definierte Scherung der Schmelze, die zu einer definierten Orientierung und somit zu einer definierten Festigkeitssteigerung führt. Bei bisherigen Verfahren, bspw. zur CD-Herstellung oder zur Herstellung optischer Teile, wird orientierungsfrei gespritzt. Hierfür erfolgt gemäß dem Stand der Technik ein relativ langsames Schließen des Werkzeugs. Bevorzugt wird das erfindungsgemäße Verfahren für symmetrische Teile, bspw. Axiallüfterräder, verwendet.

Prinzipiell können auch verstärkende Elemente, wie bspw. Glasfasern, in das Werkzeug eingelegt und mit dem erfindungsgemäßen Verfahren eingegossen werden, jedoch sind bevorzugt Fasern, insbesondere Glasfasern, in der in das Werkzeug eingespritzten Schmelze enthalten.

Bevorzugt dauert der Schließ- und Prägevorgang maximal halb so lange wie der Füllvorgang.

Die Füllzeit beträgt bevorzugt maximal 10 Sekunden, besonders bevorzugt maximal 5 Sekunden. Die Schließgeschwindigkeit beträgt mindestens 20 mm/s, bevorzugt mindestens 40 mm/s.

Vorzugsweise wird ein Tauchkanten-Werkzeug verwendet, das bei Beginnn des Prägevorgangs so weit geschlossen ist, dass keine Schmelze aus dem Werkzeug austreten kann.

Bevorzugt ist das Werkzeug gleichmäßig beheizbar und übt einen gleichmäßigen Druck über die gesamte Werkzeugfläche auf die eingespritzte Schmelze aus. Dabei ist eine symmetrische Ausgestaltung des Werkstücks bevorzugt. Ein sehr gleichmäßiges Ausgleichen des Schwindungsvolumens ist möglich, was in einem besonders geringen Verzug resultiert.

Vorzugsweise wird ein faserverstärkter Thermoplast verarbeitet. Durch das erfindungsgemäße Verfahren erfolgt eine Orientierung der Fasern, so dass beispielsweise ein gerichtetes Festigkeitsverhalten in Umfangsrichtung gezielt bereitgestellt werden kann. Beim faserverstärkten Thermoplast handelt es sich insbesondere um Polypropylen, bei der Faserverstärkung um Glasfasern, insbesondere um Glasfasern mit einer Faserlänge von mehr als 1 mm, bevorzugt 2 bis 10 mm, wobei die Fasern bevorzugt als Langfaser-Knäuel vorliegen.

Dem erfindungsgemäßen Spritzpräge-Verfahren geht vorzugsweise eine Direktcompoundierung in einem Extruder voran.

Im folgenden wird die Erfindung anhand zweier Ausführungsbeispiele unter Bezugnahme auf die Zeichnung im einzelnen erläutert. In der Zeichnung zeigen:

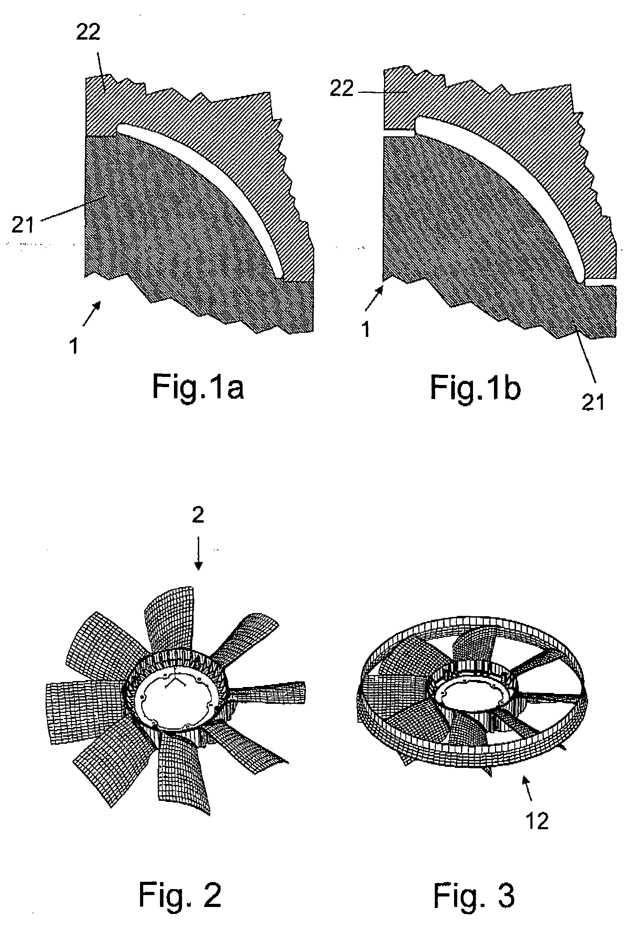

- Fig. 1 a: einen Schnitt durch einen Teil eines Tauchkantenwerkzeugs zum erfindungsgemäßen Spritzprägen im geschlossenen Zustand,
- Fig. 1 b: einen Fig. 1 a entsprechenden Schnitt im geöffneten Zustand,
- Fig. 2: eine perspektivische Ansicht eines Axiallüfterrades gemäß einem ersten Ausführungsbeispiel, und
- Fig. 3: eine perspektivische Ansicht eines Mantellüfterrades gemäß einem zweiten Ausführungsbeispiel.

Beim erfindungsgemäßen Spritzprägen wird auf einer im wesentlichen konventionellen Spritzgießmaschine die Schmelze in ein teilgeöffnetes Werkzeug, welches als Tauchkanten-Werkzeug 1 ausgebildet ist, eingespritzt.

Dabei ist das Werkzeug 1 gleichmäßig beheizbar und kann einen sehr gleichmäßig verteilten Druck auf das Werkstück, vorliegend ein Axiallüfterrad 2, wie es in Fig. 2 dargestellt ist, aufbringen, was auch durch die Befüllung unterstützt wird.

Bei der Schmelze handelt es sich um mit Glasfasern verstärktes Polypropylen, wobei die Faserlängen im wesentlichen zwischen 2 und 10 mm betragen. Die Einbringung der Glasfasern erfolgt mittels Direktcompoundierung in einem herkömmlichen Extruder, bspw. mittels eines Gleichdrall-Doppelschneckenextruders, d.h. das Compoundieren und Extrudieren erfolgt in einem Schritt.

Die Werkzeugöffnung beträgt vorliegend ca. 200%, d.h. das eingeschlossene Volumen im Werkzeug im geöffneten Zustand ist doppelt so groß wie im geschlossenen Zustand. Im Gegensatz zu den herkömmlichen Werkzeugen zum Spritzprägen schließt das für das erfindungsgemäße Verfahren verwendete Tauchkanten-Werkzeug 1 deutlich schneller, wobei es eine Schließgeschwindigkeit von bis zu 40 mm/s erreicht. Dabei dauert der Schließ- und Prägevorgang beim vorliegenden Ausführungsbeispiel mit einer Schließ-/Prägedauer ts von etwa 2 Sekunden nur etwa halb so lang wie der Füllvorgang mit einer Fülldauer tf etwa 4 Sekunden. Durch den extrem schnellen Schließ-/Prägevorgang, der direkt im Anschluss an den Füllvorgang startet, erfolgt eine Strukturierung der Schmelze im Werkzeug 1, d.h. die Glasfasern sind im fertigen Axiallüfterrad 2 in gewissem Maße orientiert angeordnet, wodurch sie die Festigkeitseigenschaften gezielt verbessern. In Folge der homogenen Temperaturführung im Werkzeug 1 wird ein Verzug des Werkstücks verhindert.

Dadurch, dass das Lüfterrad nach einem Spritzprägeverfahren, bevorzugt mit Hilfe eines Tauchkantenwerkzeugs 1, hergestellt ist, ragt der Grat, der unweigerlich an der Trennlinie zwischen den beiden Werkzeughälften entsteht, in den Fig. 1a und 1b nach oben ab und nicht wie bei herkömmlichen Verfahren zur Seite. Hierdurch wird ein Hantieren mit dem Lüfterrad unter Umständen erleichtert. In Fig. 1 a und 1 b ist ein Tauchwerkzeug 1 mit einem ersten Werkzeugteil 21 und einem zweiten Werkzeugteil 22 dargestellt.

Gemäß einem zweiten Ausführungsbeispiel wird ein Mantellüfterrad 12, wie es in Fig. 3 dargestellt ist, mittels des erfindungsgemäßen Spritzpräge-Verfahrens hergestellt. Die Materialien und deren Vorbereitung sind die gleichen wie beim ersten Ausführungsbeispiel.

Gemäß dem zweiten Ausführungsbeispiel beginnt der Schließ- und Prägevorgang, der insgesamt ca. 5 Sekunde dauert, bereits kurz bevor das Werkzeug vollständig gefüllt ist, wobei der gesamte Füllvorgang ca. 10 Sekunden dauert. Vorliegend werden Schließgeschwindigkeiten von ca. 20 mm/s erreicht. Die Werkzeugöffnung beträgt vorliegend ca. 300%, d.h. das eingeschlossene Volumen im Werkzeug im geöffneten Zustand ist dreimal so groß wie im geschlossenen Zustand.

Gemäß einem weiteren Ausführungsbeispiel erfolgt zusätzlich zum ersten und/oder zweiten Ausführungsbeispiel während oder nach dem das Spritzprägen und/oder Spritzgießen ein Schäumvorgang. Das Aufschäumen wird entweder durch den Zusatz von chemischen Aufschäummifteln und/oder durch physikalisches Aufschäumen beispielsweise durch das Einbringen von Stickstoff und/oder Sauerstoff erreicht.

## Patentansprüche

1. Spritzpräge-Verfahren, insbesondere zur Herstellung von Lüfterrädern aus einem Thermoplast, **dadurch gekennzeichnet, dass** der Schließ- und Prägevorgang (ts) maximal so lange wie der Füllvorgang (tf) dauert.

2. Spritzpräge-Verfahren nach Anspruch 1, **dadurch gekennzeichnet, dass** der Schließ- und Prägevorgang (ts) maximal halb so lange wie der Füllvorgang (tf) dauert.

3. Spritzpräge-Verfahren nach Anspruch 1 oder 2, **dadurch gekennzeichnet, dass** die Füllzeit maximal 10 Sekunden beträgt.

4. Spritzpräge-Verfahren nach einem der vorhergehenden Ansprüche, **dadurch gekennzeichnet, dass** die Schließgeschwindigkeit mindestens 20 mm/s beträgt.

5. Spritzpräge-Verfahren nach Anspruch 4, **dadurch gekennzeichnet, dass** die Schließgeschwindigkeit mindestens 40 mm/s beträgt.

6. Spritzpräge-Verfahren nach einem der vorhergehenden Ansprüche, **dadurch gekennzeichnet, dass** ein Tauchkanten-Werkzeug (1) verwendet wird, das bei Beginn des Prägevorgangs so weit geschlossen ist, dass keine Schmelze aus dem Werkzeug austreten kann.

7. Spritzpräge-Verfahren nach einem der vorhergehenden Ansprüche, **dadurch gekennzeichnet, dass** das Werkzeug (1) gleichmäßig beheizt wird.

8. Spritzpräge-Verfahren nach einem der vorhergehenden Ansprüche, **dadurch gekennzeichnet, dass** das Werkzeug (1) auf die Schmelze einen gleichmäßigen Druck über die gesamte Werkzeugfläche ausübt.

9. Spritzpräge-Verfahren nach einem der vorhergehenden Ansprüche, **dadurch gekennzeichnet, dass** ein insbesondere faserverstärkter Thermoplast verarbeitet wird.

10. Spritzpräge-Verfahren nach Anspruch 9, **dadurch gekennzeichnet, dass** der Thermoplast Polypropylen oder Polyamid enthält oder ist.

11. Spritzpräge-Verfahren nach Anspruch 9 oder 10, **dadurch gekennzeichnet, dass** die Faserverstärkung durch Glasfasern gebildet wird.

12. Spritzpräge-Verfahren nach Anspruch 11, **dadurch gekennzeichnet, dass** die Glasfasern eine Faserlänge von mehr als 1 mm aufweisen.

13. Spritzpräge-Verfahren nach einem der vorhergehenden Ansprüche, **dadurch gekennzeichnet, dass** dem Spritzprägen eine Direktcompoundierung in einem Extruder vorangeht.

14. Lüfterrad, insbesondere für ein Kraftfahrzeug, **dadurch gekennzeichnet, dass** das Lüfterrad nach einem Spritzprägeverfahren, insbesondere mit Hilfe eines Tauchkantenwerkzeugs (1), hergestellt ist.

15. Lüfterrad nach Anspruch 14, **dadurch gekennzeichnet, dass** das Lüfterrad (2, 12) nach einem Verfahren gemäß einem der Ansprüche 1 bis 13 hergestellt ist.

16. Lüfterrad nach Anspruch 14 oder 15, **dadurch gekennzeichnet, dass** das Lüfterrad (2, 12) aus glasfaserverstärktem Polypropylen gefertigt ist.

17. Lüfterrad nach Anspruch 16, **dadurch gekennzeichnet, dass** die Glasfasern eine Faserlänge von mehr als 1 mm aufweisen und orientiert angeordnet sind.
